# EUROPEAN PATENT APPLICATION

(11) **EP 4 286 030 A1**
(43) Date of publication of application: **06.12.2023**
(21) Application number: 23176248.5
(22) Date of filing: 31.05.2023
(51) Int. Cl.: B01D 39/06, B01D 39/20, C22B 9/02, C22B 21/06

(54) **SYSTEMS, METHODS, AND FILTER MEDIA FOR FILTERING MOLTEN ALUMINUM AND ALUMINUM ALLOYS**

(30) Priority: 31.05.2022 US 202263347446 P
(71) Applicant: 2498890 Ontario Inc., Palmerston, Ontario N0G 2P0 (CA)
(72) Inventor: REYNOLDS, Mark, Palmerston, N0G 2P0 (CA)
(74) Representative: Humphrey-Evans, Edward John

(57) **Abstract**

Systems, methods, and filter media for filtering molten aluminum or aluminum alloy are provided. The filter media includes a plurality of porous reticulated filter media pieces composed of at least one type of bonded particle. Each of the plurality of filter media pieces have a porosity between 5 pores per inch (PP) and 90 pores per inch (2 and 36 pores per cm) and are between ¾ inches and 6 inches (1.90cm and 15cm) across and between 1/2 inches and 2 inches (1.25cm and 5cm) thick. The filter media pieces provide a plurality of external tortuous paths between the filter media pieces and a plurality of internal tortuous paths within individual ones of the filter media pieces for the molten aluminum or aluminum alloy to flow through when the filter media pieces are arranged in a filtration vessel. The filter media may be used in an inline deep bed aluminum filtration process to replace existing media.

## Description

### Technical Field

The following relates generally to metal filtration, and more specifically to systems and methods for filtering aluminum with a deep bed filter.

### Introduction

Impurities in a molten metal (e.g. aluminum, aluminum alloys) such as non-metallic inclusions and hydrogen can adversely affect the mechanical, physical, and chemical properties of metal products made from the molten metal, such as metal castings. Adversely affected properties may include strength, electrical and thermal conductivity, corrosion resistance, and the like. The removal or reduction of such impurities in molten metals is an important part of a casting line or casting process. It is preferred that refining of the molten metal be carried out before it is poured into a mold cavity or other such step.

Impurity reduction performance requirements are increasing. Increases in impurity reduction performance requirements may be driven by demands for high value-added product in various fields of application. Demands may be particularly high in fields with high standards of quality control, such as aerospace and automotive.

Various systems and approaches exist for removing or reducing impurities in a molten metal.

However, existing systems, such as ceramic foam filters (CFFs), accommodate a low volume of molten metal and have a low volumetric flow rate of liquid flow. The inherent fragility and practicalities of manufacturing limit the size of CFF filters. The filter box of a CFF is typically no larger than 30 inches (76.2cm) square for accommodating at most a 26 x 26 inch (66cm x 66cm) CFF. Each filter box is configured to accept a single filter that spans the cavity of the filter box horizontally. Therefore, CFFs are limited, particularly by size, in throughput of the filter.

Existing systems further include deep bed filters (DBFs) which are of the order of 8 feet x 5 feet wide and 3 feet deep (2.438m x 1.524m x 0.914m). The current systems filter approximately 5 million pounds of metal over 7 to 10 days. Industry cast house operations where cast slab or sheet casting is performed to produce aluminum sheets range between 0.1 and greater than 1 million pounds (0.0454 and 454000Kg) in a cast. The size of DBFs for existing systems required to meet this proposed increased volume is not practical.

Furthermore existing deep bed aluminum filtration systems have long priming times, are subject to cold zones of an uneven thermal gradient, are heavy and generate substantial waste when the filter media needs to be changed. Existing systems are also highly limited in the volume of molten metal they can filter before the filter medium needs to be changed.

Current techniques for filtering aluminum include deep bed filtration systems. Examples of such deep bed filtration systems include Novelis^{™} PAE PDBF deep bed filter (https://novelispae.com/pdbf-deep-bed-filter/) and STAS^{™} Deep Bed Filter^{™} (https://www.stas.com/en/products/metal-treatment-and-casthouse-technologies/dbf-deep-bed-filter/). A deep bed filter includes a heated box that uses an internal media of ¾ (1.90cm) high purity alumina balls and crushed gravel to enact a slow flow system that allows the removal of up to 90 % of all 20 micron (0.002cm) or larger inclusions from the molten aluminum. This is the commercially accepted best practice for high value aluminum products used in the aviation, beverage can and thin gauge foil industries.

Existing deep bed aluminum filtration systems and techniques have various limitations. Firstly, the rigid alumina ball creates a flow matrix that is a small fraction of the box volume. This is less than 30% of the total volume. This limits total filter life. A large surface area is required to allow for the metal flow speed reduction that makes the filter system effective. Secondly, the media is very dense and requires extensive preheat prior to charging the box with liquid metal. This takes a long period of time to allow the mass of the lining to heat soak to the required temperature. Thirdly, the media density creates thermal gradients throughout the box creating cold zones that promote freezing of the liquid metal around the perimeter and loss of active filtration area. The limited amount of liquid metal makes thermal transfer from the heating system unresponsive and problematic. Fourthly, the weight of the box becomes substantial as it is scaled larger. With the advent of the larger ingot casting and greater tonnages per cast, box sizes continue to grow to add media volume area to meet the demand. In many older casting plants, there are floor space or lifting crane limitations that prevent this.

Accordingly, there is a need for an improved system and method for aluminum filtration that overcomes at least some of the disadvantages of existing or conventional metal treatment systems, including existing in-line deep bed aluminum filtration systems.

### Summary

A filter media for use in filtering molten aluminum or aluminum alloy is provided. The filter media comprises a plurality of porous reticulated filter media pieces composed of at least one type of bonded particle. Each of the plurality of filter media pieces have a porosity between 5 pores per inch (PP) and 90 pores per inch (2 and 36 pores per cm) and are between ¾ and 6" (1.875 and 15 cm) across and between 1/2" and 2" (1.25 and 10cm) thick. The filter media pieces provide a plurality of external tortuous paths between the filter media pieces and a plurality of internal tortuous paths within individual ones of the filter media pieces for the molten aluminum or aluminum alloy to flow through when the filter media pieces are arranged in a filtration vessel.

The porosity of the filter media pieces may be between 10 PPI and 50 PPI (2 and 10 ppcm).

The porosity of the filter media pieces may be between 10 PPI and 30 PPI (2 and 6 ppcm).

The plurality of filter media pieces may have substantially the same geometrical shape.

The plurality of filter media pieces may have a plurality of geometrical shapes.

The plurality of geometrical shapes may include at least one obtuse shape.

The plurality of geometrical shapes may include at least one irregular shape.

A geometrical shape and size of the filter media pieces may be selected to provide an optimum packing density of the filter media pieces when arranged in the filtration vessel.

The filter media pieces may have at least one geometrical shape including any one or more of a triangle, a rectangle, a star, and a diamond.

The at least one type of bonded particle may include a ceramic.

The ceramic may be a ceramic foam.

The ceramic may be fused alumina.

The ceramic may be zirconia silicate.

The filter media pieces may be treated with a dewetting agent prior to use.

The dewetting agent may be fluorine-based or chlorine-based.

The dewetting agent may be a fluoride salt or a halide salt.

The dewetting agent may be a magnesium silicofluoride solution.

An inline deep bed aluminum filtration system is also provided that includes the filter media described above.

A method of filtering molten aluminum or aluminum alloy is also provided. The method includes providing a filter media composed of a plurality of porous reticulated filter media pieces in a vessel such that the filter media pieces provide a plurality of external tortuous paths between the filter media pieces and a plurality of internal tortuous paths within individual ones of the filter media pieces for the molten aluminum or aluminum alloy to flow through when the filter media pieces are arranged in the vessel. The filter media pieces are composed of at least one type of bonded particle. The plurality of filter media pieces have a porosity between 5 pores per inch (PP) (2 pores per cm) and 90 pores per inch (36 pores per cm) and are between ¾ and 6" (1.9cm and 15cm) across and between 1/2" and 2" (1.25cm and 10cm) thick. The method further includes filtering the molten aluminum or aluminum alloy through the porous reticulated filter media to remove inclusions from the molten aluminum or aluminum alloy.

The method may further comprise arranging the plurality of filter media pieces in a plurality of strata in the vessel. Each of the plurality of strata include a subset of the filter media pieces and the respective subsets of filter media pieces differ in at least one physical property to provide different filtering characteristics.

The at least one physical property may be any one or more of porosity, size, and geometrical shape.

The plurality of strata may include at least a top strata having a lowest relative porosity compared to the other strata and a bottom strata having a highest relative porosity compared to the other strata.

The plurality of strata may further include a middle strata positioned between the top and bottom strata and having a porosity between the porosity of top strata and the porosity of the bottom strata.

The vessel may be a deep bed aluminum filtration vessel and the method may be used in an inline deep bed aluminum filtration process.

A filter media for use in filtering molten aluminum or aluminum alloy is also provided. The filter media comprises a plurality of porous reticulated filter media pieces. Each porous reticulated filter media piece has a porosity between 5 pores per inch (PP) (2 pores per cm) and 90 pores per inch (36 pores per cm) and is between ¾ and 6" (1.9cm and 15cm) across. The filter media is configured to, when arranged in a filtration vessel, provide a plurality of external tortuous paths and a plurality of internal tortuous paths for capturing inclusions in the molten aluminum or aluminum alloy as the molten aluminum or aluminum alloy flows through the filter media.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1A is a cross-sectional schematic diagram of an aluminum filtration system including a porous reticulated filter media for filtering molten aluminum, according to an embodiment;
Figure 1B is a cross-sectional schematic diagram of the aluminum filtration system of Figure 1A in which the porous reticulated filter media is composed of a plurality of porous reticulated filter media pieces of different geometry, according to an embodiment;
Figure 2 is a schematic diagram of a porous reticulated filter media piece of the porous reticulated filter media of Figure 1B illustrating a tortuous flow path traveled by molten aluminum as the molten aluminum is passed through and filtered by the porous reticulated filter media, according to an embodiment;
Figure 3 are two-dimensional side view schematic diagrams of porous reticulated filter media pieces of various geometries for use in a porous reticulated filter media such as the porous reticulated filter media of Figures 1A and 1B, according to various embodiments;
Figure 4 is a side view schematic diagram of a porous reticulated filter media configuration of a portion of a porous reticulated filter media, such as the porous reticulated filter media of Figure 1A, illustrating an external tortuous flow path traveled by molten aluminum as the molten aluminum is passed through and filtered by the porous reticulated filter media, according to an embodiment;
Figure 5A is a cross sectional schematic diagram of the aluminum filtration system of Figure 1A including a stratified porous reticulated filter media for filtering molten aluminum, according to an embodiment;
Figure 5B is a cross-sectional schematic diagram of the aluminum filtration system of Figure 5A in which the stratified porous reticulated filter media includes first and second strata in which the strata differ in geometry, size, and porosity, according to an embodiment;
Figure 6 is a flow chart of a method of filtering molten aluminum using a porous reticulated filter media, according to an embodiment;
Figure 7 is a flow chart of a further method of filtering molten aluminum with an aluminum filtration system including a porous reticulated filter media, according to an embodiment;
Figure 8 is a flow chart of a method of manufacturing a porous reticulated filter media, such as the porous reticulated filter media of Figure 1, for use in filtering molten aluminum, according to an embodiment; and
Figure 9 is a flow chart of a method of manufacturing a porous reticulated filter media, such as the porous reticulated filter media of Figure 1, for use in filtering molten aluminum, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

The following relates generally to filtration of molten aluminum and aluminum alloys, and more specifically to systems and methods for filtering molten aluminum with a deep bed filter. Embodiments of the present disclosure include small ceramic pieces ("filter media pieces") that can act as filter media and replace the high purity alumina balls and crushed gravel used in conventional or existing applications.

The present disclosure can be used to filter molten aluminum and its alloy groups (aluminum alloys). It is to be understood that, unless otherwise stated, reference to "molten aluminum" or "aluminum" throughout the present disclosure includes aluminum and its alloy groups.

Systems and methods for aluminum filtration disclosed herein may be used as part of an in-line refining/metal filtration process to remove inclusions from molten aluminum. Inclusions that are filtered ("filtered components) may include, for example, oxides, borides, carbides, thin films, and chlorides. The system of the present disclosure filters molten aluminum through a filter media composed of a plurality of internally porous reticulated filter media pieces. The porous reticulated filter media is configured such that molten aluminum passed over the porous reticulated filter media flows through both external tortuous paths between porous reticulated filter media pieces (surface filtering) and internal tortuous paths (internal filtering) within individual porous reticulated filter media pieces.

The porous reticulated filter media of the present disclosure, which includes internal tortuous paths within individual porous reticulated filter media pieces, reduces the weight of the filter media over high purity alumina balls and crushed gravel by creating more empty space. As the filter media pieces are reduced in weight, the whole system is reduced in weight. This reduction in weight beneficially makes the metal filtration system easier to move, particularly when the casting process requires swapping filters to accommodate the filtering of various metals. This reduction in weight also reduces the waste generated when the filter needs to be changed out. The reduction of the weight also reduces the priming and preheating time of the system as the rate of change in temperature is directly proportional to the weight of the material being preheated. The reduction in weight may be approximately 80% over existing systems.

The porous reticulated filter media of the present disclosure, which includes internal tortuous paths within individual porous reticulated filter media pieces increases the surface/live area exposed to the molten aluminium of the filter media over high purity alumina balls and crushed gravel by providing internal surface area. The higher surface area of the filter media provides a greater area for inclusion capture and reduces the velocity of the liquid flow of the aluminum. This provides an increase in capture of inclusions by the filter media through an increase in intimate contact of the substrate surfaces with inclusions. Furthermore, the higher surface area extends the life of the filter by providing more surface for inclusions to cake onto.

The porous reticulated filter media of the present disclosure, which includes external tortuous paths external to individual porous reticulated filter media pieces (and between filter media pieces when arranged during filtering) increases the surface/live area exposed to the molten aluminium of the filter media over existing ceramic foam filters. The higher surface area of the filter media provides a greater area for inclusion capture and reduces the velocity of the liquid flow of the aluminum. This provides an increase in capture of inclusions by the filter media through an increase in intimate contact of the substrate surfaces with inclusions. Furthermore, the higher surface area extends the life of the filter by providing more surface onto which inclusions can cake.

The porous reticulated filter media of the present disclosure can be used to replace a high-density alumina media (e.g. internal media of ¾ (1.9cm) high purity alumina balls and crushed gravel to enact a slow flow system) in a deep bed or similar aluminum filtration process/system.

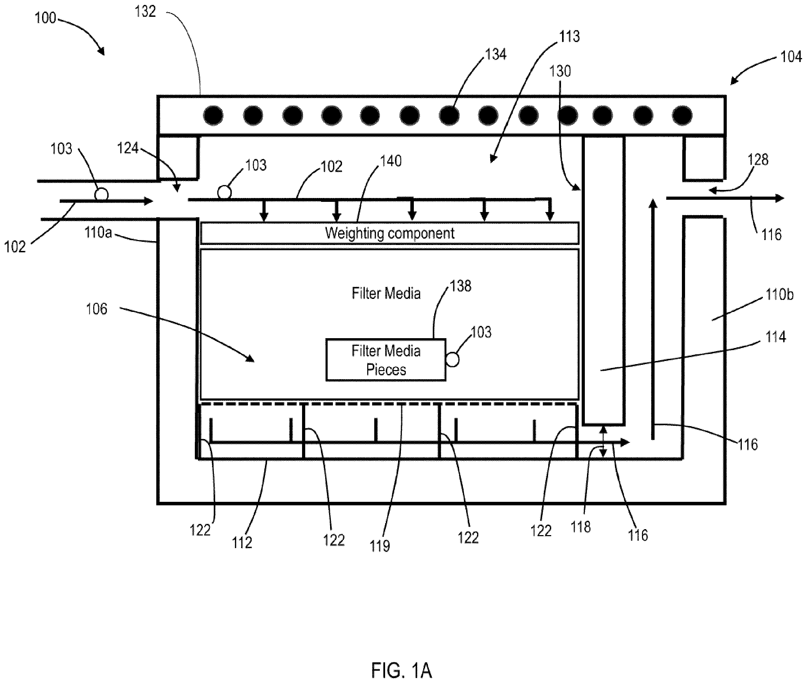

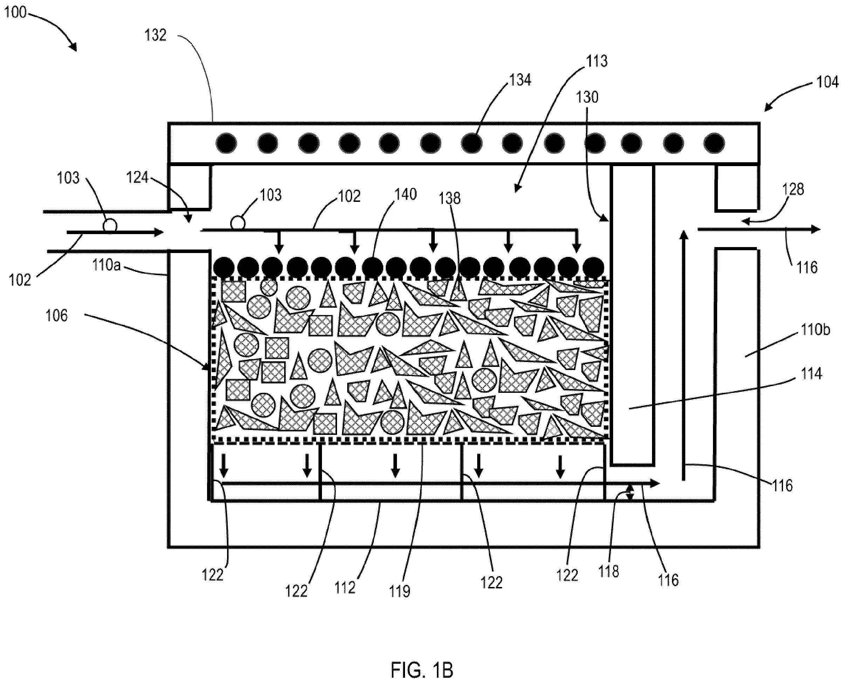

Referring now to Figure 1A, shown therein is an aluminum filtration system 100, according to an embodiment. Figure 1B shows a particular embodiment of system 100 of Figure 1A (system 100b) in which certain system components are illustrated in more detail.

The metal filtration system 100 can be used for filtering molten aluminum by flowing the unfiltered molten aluminum 102 through the metal filtration system 100 for capturing inclusions 103 from the unfiltered molten aluminum 102. In a particular embodiment, the metal filtration system 100 can be used for the removal of inclusions 103 from molten aluminum or an aluminum alloy. It is to be understood that the inclusion 103 is not shown to scale but just a graphical representation of inclusion for illustrative purposes. Inclusions 103 may include, for example, any one or more of an oxide, a boride, a chloride, a carbide, and a thin film.

In a particular embodiment, the unfiltered molten aluminum 102 may be injected with titanium boron (e.g. titanium boron master alloy). The injection of the titanium boron into the unfiltered molten aluminum 102 typically occurs prior to entering the metal filtration system 100. The injection of the titanium boron into the unfiltered molten aluminum 102 promotes the capture of inclusions 103. The titanium boron adheres to the inclusions 103 while in the unfiltered molten aluminum 102. The inclusion-titanium boride particle that is formed is larger than the inclusion 103 alone. The larger particle is beneficially more likely to be captured by the porous reticulated filter media 106.

The system 100 may be used as one part of a casting line. In this sense, the system 100 may be considered as one part of an overall melt quality package. For example, the system 100 may be positioned between a metal treatment stage and a casting stage in the casting line.

The system 100 may be implemented as a deep bed-type filter filtration system.

The system 100 includes a vessel 104. The vessel 104 acts as a container for various components of the system 100 (including porous reticulated filter media 106, described below). The vessel 104 directs the flow of the unfiltered molten aluminum 102 through the porous reticulated filter media 106, described below during filtration. The vessel 104 includes one or more side walls 110 (side walls 110a and 110b are shown in Figure 1). In an embodiment, the vessel 104 may include four generally rectangular side walls 110 and be generally rectangular in shape. In another embodiment, side walls 110 may be configured such that one or more side walls 110 forms an irregular shape. In an embodiment, the vessel 104 may be a conventional deep bed-type filter box. In a particular example, the deep bed-type filter box may be approximately 8' (2.5m) long x 5' (1.5m) wide x 3' (1m) deep.

The vessel 104 further includes a floor 112 forming the bottom of the vessel 104. The side walls 110 and floor 112 of the vessel 104 form a cavity 113. The vessel 104 may further include a baffle 114. The baffle 114 is a partial wall. The baffle 114 is arranged vertically in the cavity 113. The baffle 114 may be arranged generally parallel to side wall 110a. The baffle 114 vertically separates the unfiltered molten aluminum 102 from filtered molten aluminum 116 in the cavity 113. The baffle 114 may be a wall that runs vertically downward from the top of the vessel 104 and terminates before it reaches the floor 112 such that there is a baffle gap 118 between the bottom of the baffle 114 and the floor 112. The baffle gap 118 allows the filtered molten aluminum 116 to flow past the baffle 114.

The vessel 104 may further include a grid 119. The grid 119 provides a substantially horizontal surface for the porous reticulated filter media 106 to rest on. The surface of the grid 119 is positioned in the cavity 113 above the baffle gap 118. The grid 119 is porous. The porous nature of the grid 119 allows the molten aluminum to exit the porous reticulated filter media 106, and flow along the floor 112 through the baffle gap 118 to the other side of the baffle 114. The pores of the grid 119 are sized such that the porous reticulated filter media 106 will not pass through the pores of the grid 119. The grid 119 may be formed from a plurality of grid plates. In a particular embodiment, the grid plates are approximately 100mm square by 12mm thick. The grid plates may include feet 122 extending from the bottom of the grid plate to the floor 112. The feet 122 provide a structure that maintains the grid plates above the floor 112. In a particular embodiment, the grid plates are maintained generally 100mm above the floor 112.

The vessel 104 further includes an inlet 124. The inlet 124 receives the unfiltered molten aluminum 102 into the vessel 104. The inlet 124 is an opening in the side wall 110a. In a particular embodiment, the inlet 124 is located on the upper portion of the side wall 110a such that the inlet 124 is above the porous reticulated filter media 106. In this embodiment, the unfiltered molten aluminum 102 flows through porous reticulated filter media 106 by gravity upon exiting the inlet 124.

The vessel 104 further includes an outlet 128. The outlet 128 allows the filtered molten aluminum 116 to exit the vessel 104. The outlet 128 is an opening in the side wall 110b. In a particular embodiment, the outlet 128 is located to maximize the horizontal distance from the inlet 124. The outlet 128 may be positioned at the bottom portion of the side wall 110b such that it is below the inlet 124. In this embodiment, the filtered molten aluminum 116 may exit through the outlet 128 via gravity. The outlet 128 may be positioned such that it above the baffle gap 118.

The vessel 104 further includes a refractory material lining. The refractory material lining is on the inner surfaces of the side walls 110 and floor 112 which face the cavity 113. The refractory material lining is a high insular nature. The refractory material insulates the vessel 104. The refractory material may be 4-6" thick.

The vessel 104 further includes a lid 132. The lid 132 forms the top of the vessel 104. The lid 132 may be removable. The lid 132 may be insulated.

The lid 132 may provide heat for maintaining the molten aluminum in a molten state. The lid 132 may include a plurality of heating elements 134 for providing heat for further maintaining the molten aluminum in a molten state. In a particular embodiment, the heating elements 134 are glow bars. The glow bars may comprise silicon carbide. The glow bars may be electronically connected to a high amp power source. In a further particular embodiment, the heating elements 134 are configured to provide temperatures in excess of 1000° Celsius. In a further particular embodiment, the aluminum temperature is maintained at a temperature from 680 to 750° Celsius.

The system 100 may further include a trough 136. The trough 136 delivers the unfiltered molten aluminum 102 to the cavity 113 of the vessel 104. The trough 136 may be connected to inlet 124.

The system 100 further includes a porous reticulated filter media 106.

The porous reticulated filter media 106 is disposed in the cavity 113 of the vessel 104. Generally, the porous reticulated filter media 106 is positioned in the cavity 113 below the inlet 124 and above the floor 112 of the vessel 104 such that the molten aluminum flows through the porous reticulated filter media 106 via gravity.

The porous reticulated filter media 106 filters the unfiltered molten aluminum 102 by removing inclusions 103 as the unfiltered molten aluminum 102 flows through the porous reticulated filter media 106.

The porous reticulated filter media 106 is composed of a plurality of porous reticulated filter media pieces 138 (or "filter media pieces", referred to individually as "porous reticulated filter media piece" or "filter media piece").

The porous reticulated filter media pieces 138 are internally porous. In an embodiment, the porous reticulated filter media pieces may have a porosity ranging from 5 pores per inch ("PPI") (2 pores per cm) to 90 PPI (36 pores per cm). In a particular embodiment, the porous reticulated filter media pieces 138 may have a porosity ranging from 10 PPI to 50 PPI (4 pores per cm to 20 pores per cm). In another embodiment, the filter media pieces 138 may have a porosity ranging from 10 PPI to 30 PPI (4 pores per cm to 12 pores per cm).

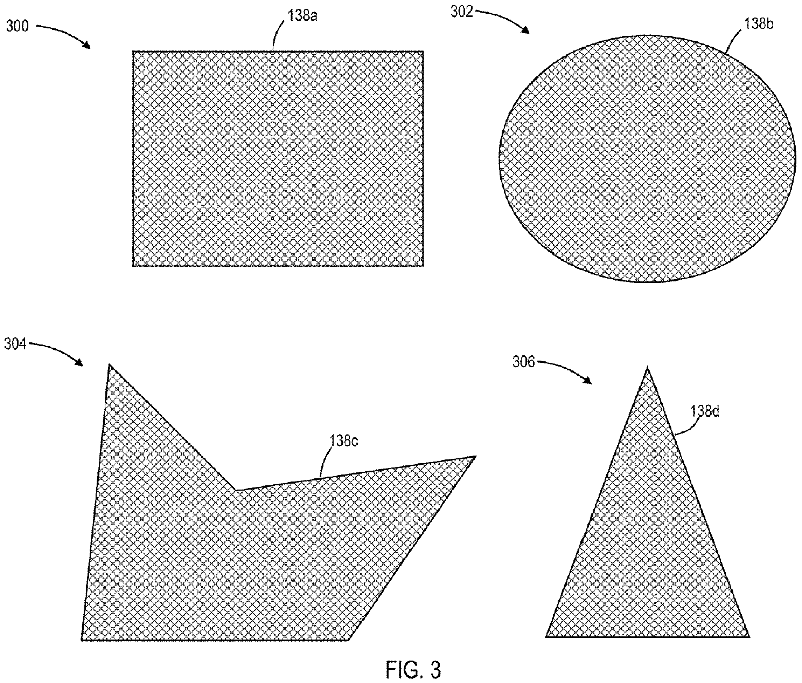

The porous reticulated filter media pieces 138 may be of one or more geometries or geometrical shapes. For example, in some cases, the filter media pieces 138 may all have the same or substantially similar geometrical shape (e.g. all triangles) ("homogenous geometry"). In other cases, the filter media pieces 138 may have at least two different geometrical shapes (e.g. triangles and rectangles) ("heterogeneous geometry"). For a particular geometry of filter media pieces 138, the size of the pieces 138 may be the same or may vary. The porous reticulated filter media pieces 138 may be irregularly shaped, such as the porous reticulated filter media piece 300c of Figure 3C further described below. In a particular embodiment, the porous reticulated filter media pieces 138 are of a plurality of geometries. For example, the porous reticulated filter media pieces 138 may include two or more of the geometries of the porous reticulated filter media pieces 300 thru 308 of Figures 3A thru 3D respectively, further described below.

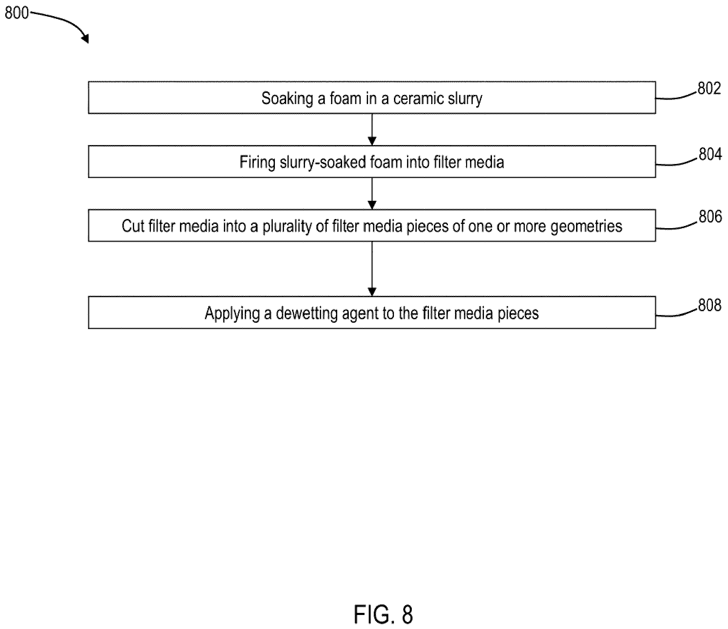

Embodiments in which the filter media pieces 138 have a plurality of geometries may advantageously provide for an increased packing density of the porous reticulated filter media pieces 138 when the filter media 106 is arranged in the vessel 104. The high packing density reduces channeling. The plurality of geometries of the porous reticulated filter media pieces 138 also provides initial tortuous paths which do not block initial priming of the filter. The porous reticulated filter media pieces 138 may be manufactured by the method 800 of Figure 8, described below. The porous reticulated filter media pieces 138 may be composed of a bonded particle. The porous reticulated filter media pieces 138 may be composed of a foam media. The porous reticulated filter media pieces 138 may be composed of a reticulated foam. The porous reticulated filter media pieces 138 may be composed of a ceramic, such as a ceramic foam. The porous reticulated filter media pieces 138 may be composed of a fused alumina. The porous reticulated filter media pieces 138 may be composed of zirconia silicate.

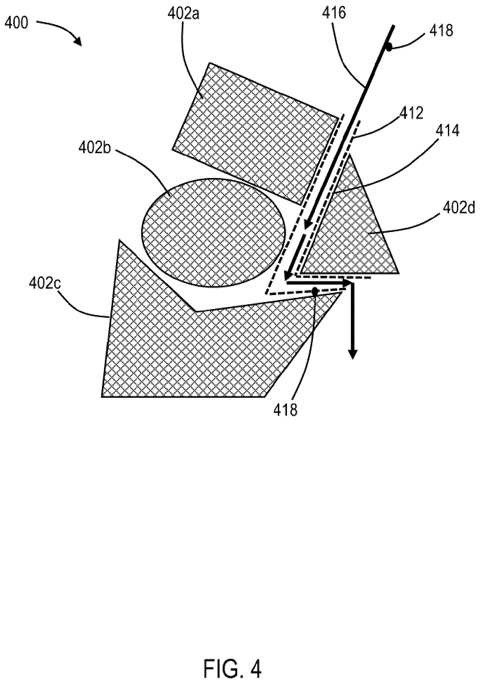

In a particular embodiment, each porous reticulated filter media piece 138 is less than 6" (15 cm) across. This size may optimize the packing density of the porous reticulated filter media pieces 138 to provide optimal external tortuous paths for the filter media 106 such as, for example, external tortuous paths 412 of Figure 4, described herein below. Having porous reticulated filter media pieces 138 greater than 6" (15 cm) across may provide excess channeling than is optimal for proper filtration. In a further particular embodiment, the porous reticulated filter media piece 138 is between 3/4" and 6" (1.90cm and 15cm) across. Dimensions of filter media pieces 138 across may vary across filter media pieces (i.e. to have pieces of different sizes) or may be consistent across all filter media pieces.

The thickness of each porous reticulated filter media piece 138 may be between ½" and 2" (1.25 cm and 5cm) thick. In a particular embodiment, the thickness of each porous reticulated filter media piece 138 may be between ¾" and 1" (1.90cm and 2.5cm) thick. Thickness may differ across filter media pieces 138 (to provide variable thickness) or may be consistent across all filter media pieces 138.

In some embodiments, the porous reticulated filter media pieces 138 may be treated with a dewetting agent. The dewetting agent changes the wetting angle between the porous reticulated filter media pieces 138 and the molten aluminum. The dewetting agent decreases or breaks the surface tension of the molten aluminum. Decreasing or breaking the surface tension reduces the formation of air bubbles and allows the molten aluminum to completely contact the surface of the reticulated filter media pieces 138. This reduces the back pressure during priming. By reducing the back pressure, the priming height of the molten aluminum is reduced. This beneficially makes the porous reticulated filter media pieces 138 easier to prime. The dewetting agent may be fluorine-based or chlorine-based. For example, the dewetting agent may be a fluoride salt or a halide salt. In an example, the dewetting agent is a magnesium silicofluoride solution. The dewetting agent may be applied to the porous reticulated filter media pieces 138 at the time of manufacturing the porous reticulated filter media pieces 138. The dewetting agent may be applied to the porous reticulated filter media pieces 138just priorto the insertion of porous reticulated filter media pieces 138 in the vessel 104. The dewetting agent may be applied to the porous reticulated filter media pieces 138 once the filter media pieces 138 are inserted in the vessel 104.

The porous reticulated filter media pieces 138 are placed inside the vessel 104 though an opening in the vessel 104 which is closed by closing the lid 132. The porous reticulated filter media pieces 138 rest on the grid 119. In a particular embodiment, the vessel 104 is filled with enough porous reticulated filter media pieces 138 are added to the vessel 104 between the side wall 110a and the baffle 114 such that the porous reticulated filter media 106 traverses vertically from the grid 119 to the to just below the inlet 124.

The system 100 further includes a weighting component 140. The weighting component 140 is positioned on top of the porous reticulated filter media 106. The weighting component 140 is configured to restrict movement of the porous reticulated filter media pieces 138 in the vessel 104. The weighting component 140 may keep the porous reticulated filter media pieces 138 static. The weighting component 140 may resist the buoyancy of the porous reticulated filter media pieces 138 in the unfiltered molten aluminum 102 until the porous reticulated filter media pieces 138 are saturated with molten aluminum. The weighting component 140 may be any component comprising one or more pieces that is capable of weighing down the porous reticulated filter media 106 to restrict upward vertical movement of the porous reticulated filter media 106 in the vessel during filtration and that is suitable for use in the vessel 104.

In an embodiment, such as shown in Figure 1B, the weighting component 140 may comprise a plurality of weighted balls or spheres. The weighted balls may have a specific gravity of substantially 182 pounds per cubic foot. In a particular embodiment, the weighting component 140 may comprise a plurality of tabular balls that interlock. In another embodiment, the weighting component 140 may comprise one or more refractory tiles. The weighting component 140 may also connect to one or more of the side walls 110. In a particular embodiment, the weighting component 140 is located approximately 50mm below the top surface of unfiltered molten aluminum 102 during filtration.

An example filtration process using system 100 will now be described. The unfiltered molten aluminum 102 flows from the trough 136 towards the vessel 104 and is received by the inlet 124. The unfiltered molten aluminum 102 flows through the inlet 124 into the cavity 113 of the vessel 104. Once inside the vessel 104, the unfiltered molten aluminum 102 flows over the porous reticulated filter media 106 and down through the porous reticulated filter media 106 via gravity. As the unfiltered molten aluminum 102 flows through the porous reticulated filter media 106, the porous reticulated filter media 106 removes inclusions from the unfiltered aluminum 102 such that the molten aluminum exiting the porous reticulated filter media 106 is filtered molten aluminum 116. Inclusions captured by the porous reticulated filter media 106 cake out on the porous reticulated filter media 106. The filtered molten aluminum 116 flows through the grid 119via gravity to the floor 112 of the vessel 104. The filtered molten aluminum 116 flows along floor 112 under the baffle 114 through the baffle gap 118. The filtered molten aluminum 116 then exits the vessel 104 through the outlet 128.

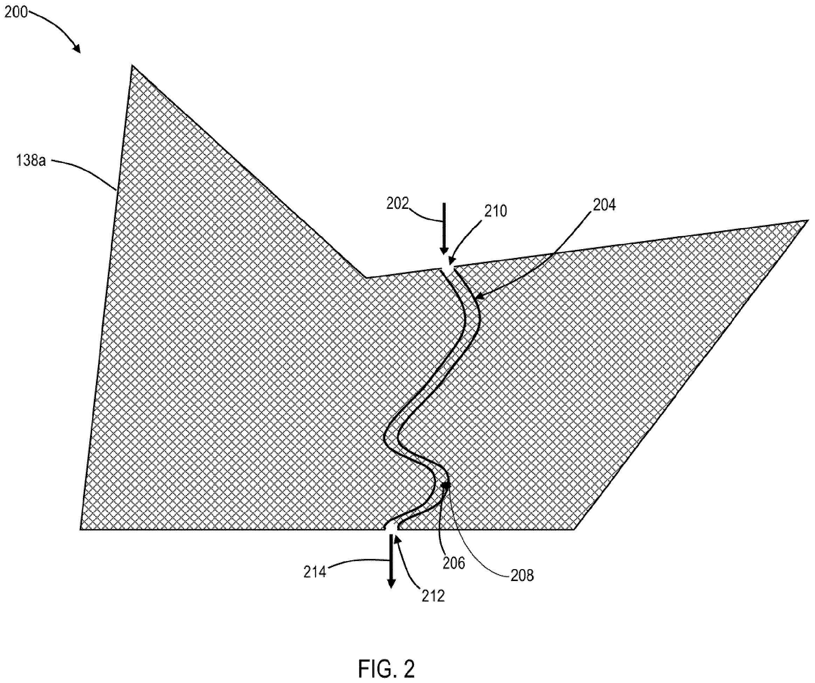

Referring now to Figure 2, shown therein is an example 200 of porous reticulated filter media piece 138 of the porous reticulated filter media 106 of Figure 1B in isolation, according to an embodiment. While porous reticulated filter media piece 200 shown in Figure 2 has a particular geometric shape, it is to be understood that features of porous reticulated filter media piece 200 described in reference to Figure 2 apply to porous reticulated filter media pieces of other geometries as well. The porous reticulated filter media piece 200 may be positioned anywhere in the porous reticulated filter media 106 of Figure 1B.

The porous reticulated filter media piece 200 filters unfiltered molten aluminum 202. The unfiltered molten aluminum 202 may be the unfiltered molten aluminum 102 of Figure 1. The porous reticulated filter media piece 200 includes a plurality of tortuous paths 204. The tortuous paths 204 are configured to filter at least one inclusion 206 out of the unfiltered molten aluminum 202 as the unfiltered molten aluminum 202 flows through the tortuous paths 204.

Each tortuous path 204 terminates at a first end in a receiving pore 210. The receiving pore 210 is configured to receive the unfiltered molten aluminum 202. In an example, the tortuous path 204 may receive the unfiltered molten aluminum 202 directly from the inlet 124 of Figure 1. In a further example, the unfiltered molten aluminum 202 may have previously flowed through a previous tortuous path in another porous reticulated filter media piece of the porous reticulated filter media 106. In this example, the unfiltered molten aluminum 202 is referred to here as unfiltered molten aluminum 202 in the sense that is unfiltered by the current tortuous path 204.

Each tortuous path 204 includes a substrate surface 208. The substrate surface forms the walls of the tortuous path. The substrate surface directs the flow of the unfiltered molten aluminum 202 through the tortuous path 204. The substrate surface 204 provides a surface upon which at least one inclusion 206 is captured. Each tortuous path 204 terminates at a second end in an outlet pore 212. The outlet pore 212 is configured such that at filtered molten aluminum 214 outputs through the outlet pore 212. The receiving pore 210 may be vertically higher in the porous reticulated filter media piece 200 than outlet pore 212. This relative positioning of the pores 210, 212 in porous reticulated filter media piece 200 allows the molten aluminum to flow through the tortuous path 204 due to gravity.

The receiving pores 210 and outlet pores 210 of the each of the plurality of tortuous paths 204 may be spaced such that the porosity of the porous reticulated filter media piece 200 is between 5 and 90 pores per inch. In a particular embodiment, the receiving pores 210 and outlet pores 210 of the each of the plurality of tortuous paths 204 are spaced such that the porosity of the porous reticulated filter media piece 200 is between 10 and 50 pores per inch (2 and 10 pores per cm). In a particular embodiment, the receiving pores 210 and outlet pores 210 of the each of the plurality of tortuous paths 204 are spaced such that the porosity of the porous reticulated filter media piece 200 is between 10 and 30 pores per inch (2 and 6 pores per cm).

This pore spacing may be preferred due to the preference to minimize the pore spacing without increasing the static pressure to displace air in voids of the porous reticulated filter media piece 200 beyond a threshold. Maintaining the static pressure below a threshold reduces clumping during priming. Minimizing the pore spacing maximizes the number of tortuous paths 204 contained in the porous reticulated filter media piece 200. Maximizing the number of tortuous paths 204 contained in the porous reticulated filter media piece 200 may also maximize the live area of the porous reticulated filter media piece 200. The maximization of the live area of the porous reticulated filter media piece 200 provides a flow matrix that is a larger fraction of the cavity 113 than porous reticulated filter media pieces without tortuous paths 204. This flow matrix advantageously minimizes the velocity of the molten aluminum for a given pressure as the molten aluminum flows through porous reticulated filter media piece 200. Due to the maximization of the number of tortuous paths 204, the overall volumetric flow rate of the molten aluminum through the porous reticulated filter media piece 200 may be comparable or faster than with a solid porous reticulated filter media piece, such as used in conventional filtering systems.

Each tortuous path 204 may filter the unfiltered molten aluminum 202. Filtering the unfiltered molten aluminum includes capturing at least one inclusion 206 of the unfiltered molten aluminum 202 as the unfiltered molten aluminum 202 flows through at least one tortuous path 204 in the porous reticulated filter media piece 200. In an example, the at least one inclusion 206 includes one or more of an oxide, a boride, a carbide, a thin film, and a chloride. As the unfiltered molten aluminum 202 flows thorough the tortuous path 204. The unfiltered molten aluminum 202 intimately contacts a substrate surface 208 of the tortuous path 204. The intimate contact includes an interaction of the inclusion 206 with the substrate surface 208 wherein the inclusion 206 adheres to or cakes out on the substrate surface 208.

The porous reticulated filter media piece 200 including tortuous paths 204 uses less ceramic material than a porous reticulated filter media piece 200 of similar overall volume without such tortuous paths. This is efficient both for resource consumption and cost. The porous reticulated filter media piece 200 including tortuous paths 204 is also lighter in weight than a porous reticulated filter media piece 200 of similar overall volume without such tortuous paths. When not primed, the air that is contained within the tortuous paths 204 is less dense and therefore lighter than the material of the porous reticulated filter media piece 200 that would otherwise occupy the space of the tortuous paths 204. When primed, the unfiltered molten aluminum 202 that is contained within the tortuous paths 204 is less dense and therefore lighter than the material of the porous reticulated filter media piece 200 that would otherwise occupy the space of the tortuous paths 204. In an example, the material of the porous reticulated filter media piece 200 is a ceramic in the range of 183 pounds per cubic foot (2.931Kgm⁻³) and the molten liquid aluminum 202 is in the range of 155 pounds per cubic foot (2.483Kgm⁻³), and the entire filter media once primed is lighter as the liquid aluminum at 155 pounds per cubic foot (2.483Kgm⁻³) displaces ceramic at 183 pounds per cubic foot (2.931Kgm⁻³). This lighter weight composition is beneficial for waste disposal at the end of the usable life of the porous reticulated filter media piece 200. The porous reticulated filter media piece 200, being of lighter weight composition, is easierto remove from the vessel (with the effect multiplied across many porous reticulated filter media pieces). The porous reticulated filter media piece 200, being of lighter weight composition, generates less waste mass.

The lighter weight composition of the porous reticulated filter media piece 200 is also beneficial for transporting a plurality of such porous reticulated filter media pieces to the vessel 104 and while disposed in the vessel 104. The lighter weight composition also reduces the time to preheat and heat soak the porous reticulated filter media piece 200 for a given temperature differential or delta as the preheat and heat soak time is directly proportional thermal mass of the porous reticulated filter media piece 200.

The inclusion of tortuous paths 204 in the porous reticulated filter media piece 200 may reduce the weight of the porous reticulated filter media 106 in the vessel 104 of Figure 1 by 80% over solid filter media, such as is used in conventional filtering systems.

Referring now to Figure 3, shown therein are a plurality of example geometries 300, 302, 304, 306 of porous reticulated filter media pieces 138a, 138b, 138c, 138d, respectively, according to various embodiments. Porous reticulated filter media 106 of Figure 1B is shown as including porous reticulated filter media pieces 138 having geometries 300, 302, 304, 306. The porous reticulated filter media pieces 138a-d may be the porous reticulated filter media pieces 138 of Figure 1. The porous reticulated filter media pieces 300 thru 306 may be obtuse such as porous reticulated filter media piece 304. The porous reticulated filter media pieces 300 thru 306 may be regular shapes such as rectangular 300, oval 302 or triangular 306.

The geometries shown in Figure 3 are representative and nonlimiting, in that the porous reticulated filter media pieces 138 may be of other geometries. The geometrical shape or shapes of the filter media pieces 138 is not particularly limited. Filter media pieces may be irregular or regular geometrical shapes. For example, in other embodiments, porous reticulated filter media pieces 138, or a subset thereof, may be shaped as stars or diamonds. In some cases, geometrical shape and dimensions of porous reticulated filter media pieces may be selected to provide high or maximum surface area/live filtering area of the porous reticulated filter media pieces in the vessel 104 of Figure 1. In some cases, geometrical shape and dimensions of porous reticulated filter media pieces may be selected to provide high or maximum packing density of the porous reticulated filter media pieces in the vessel 104 of Figure 1. In some cases the geometrical shape and dimensions of the porous reticulated filter media pieces may be selected to balance providing an acceptable or desired surface area/live filtering area and an acceptable or desirable packing density of the porous reticulated filter media pieces in the vessel 104 of Figure 1. In some cases, geometries that are more cost effective to manufacture may be selected, particularly where the filter media maintains acceptable performance properties.

Referring now to Figure 4, shown therein is a side view schematic of a porous reticulated filter media configuration 400 in isolation, according to an embodiment. The porous reticulated filter media configuration 400 may be the configuration of a portion of the porous reticulated filter media 106 of figure 1 when the porous reticulated filter media 106 is disposed in the vessel 104.

The porous reticulated filter media configuration 400 includes a first porous reticulated filter media piece 402a a second porous reticulated filter media piece 402b, a third porous reticulated filter media piece 402c, and a fourth porous reticulated filter media piece 402d. The porous reticulated filter media pieces 402a-d are collectively referred generically as porous reticulated filter media piece 402 and collectively as porous reticulated filter media pieces 402. Each porous reticulated filter media piece 402 may be a porous reticulated filter media piece 138 of Figure 1. The porous reticulated filter media pieces 402 may be of one or more geometries 300-306 of the porous reticulated filter media pieces 138a-138d of Figure 3. The porous reticulated filter media pieces 402 may include porous reticulated filter media pieces 402 of a plurality of obtuse geometries.

The porous reticulated filter media pieces 402 are configured to provide an external tortuous path 412. The external tortuous path 412 terminates at a first side in at least one external substrate surface 414 of at least one porous reticulated filter media piece 410. Each external tortuous path 412 can be used to filter unfiltered molten aluminum 416 and the unfiltered molten aluminum flows through the porous reticulated filter media pieces 402. Filtering the unfiltered molten aluminum 416 includes capturing at least one inclusion 418 of the unfiltered molten aluminum 416 as the unfiltered molten aluminum 416 flows through at least one external tortuous path 412. In an example, the at least one inclusion 418 includes one or more of an oxide, boride, carbide, thin film and chloride.

As the unfiltered molten aluminum 416 flows thorough the external tortuous path 412, the unfiltered molten aluminum 416 intimately contacts the external substrate surface 414 of the tortuous path 412. The intimate contact includes an interaction of the inclusion 418 with the substrate surface 414 wherein the inclusion 418 adheres to or cakes out on the substrate surface 414. The unfiltered molten aluminum 416 may flow through a plurality of external tortuous paths 412 in the porous reticulated filter media 106 (or present in porous reticulated filter media configuration 400) during filtering.

The plurality of porous reticulated filter media pieces 402 of a plurality of geometries 300-306 of the present disclosure comprise external tortuous paths 412 with higher substrate surface 414 area to external tortuous path 412 volume ratio over systems comprising high purity alumina balls and crushed gravel. This higher ratio provides for less channeling in that less unfiltered molten aluminum flows 416 through the external tortuous path 412 without interacting with the substrate surface 414.

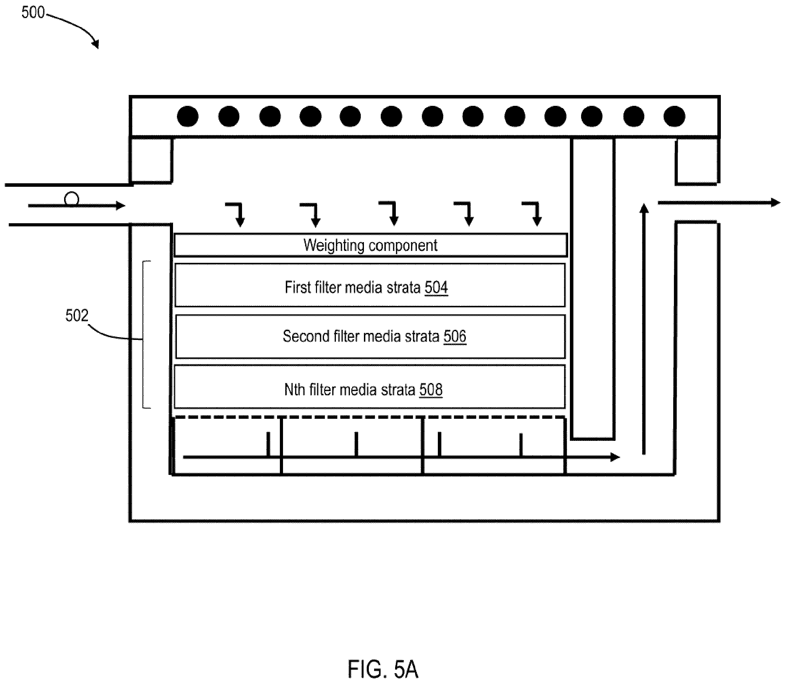

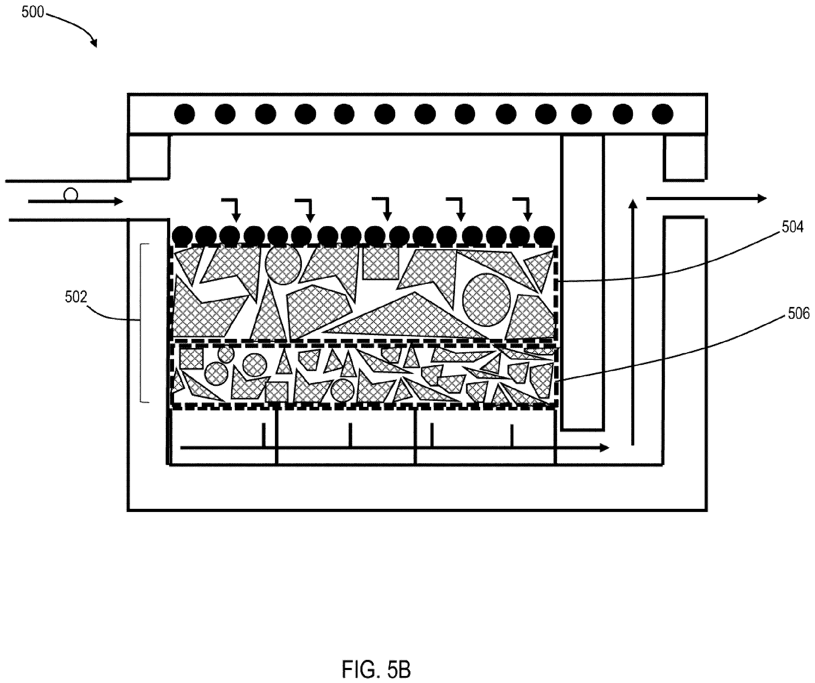

Referring now to Figure 5A, shown therein is a metal filtration system 500 including a stratified porous reticulated filter media for filtering molten aluminum, such as aluminum, according to an embodiment. The metal filtration system 500 may be the metal filtration system 100 of Figure 1. Certain features and reference numbers present in Figure 1 are not provided here to improve visibility, but it is to be understood that such features may be similarly present in the system 500 of Figure 5.

Figure 5B shows a particular embodiment of system 500 of Figure 5A (system 500b) in which the stratified porous reticulated filter media is illustrated in greater detail. The metal filtration system 500 includes a stratified porous reticulated filter media 502. The stratified porous reticulated filter media may function similarly to the porous reticulated filter media 106 of Figure 1.

The stratified porous reticulated filter media 502 includes a plurality of strata. In the system 500 of Figure 5A, the plurality of strata includes a first porous reticulated filter media strata 504, a second porous reticulated filter media strata 506, and an 'n^{th}' porous reticulated filter media strata 508. Any suitable number of strata may be used. While three strata or layers are illustrated in Figure 5A (and two in Figure 5B), it is to be understood that, in other embodiments, a different number of strata may be present. The system 500b of Figure 5B includes a stratified porous reticulated filter media 502 including only a first strata 504 and a second strata 506. The plurality of strata may be horizontal layers of filter pieces. The plurality of strata may be layered, in whole or in part, vertically.

The porous reticulated filter media 500 may include a first strata 504 and a second strata 506 wherein the first strata 504 comprises filtering characteristics differ from filtering characteristics of the second strata. The filtering characteristics may include one or more of porosity, size, and geometry.

In an embodiment, the plurality of strata may include a first strata having a low porosity (e.g. strata 504), a second strata having a medium porosity (e.g. strata 506), and a third strata having a high porosity (e.g. strata 508), wherein low, medium, and high are relative terms to one another.

In a particular embodiment, wherein the first strata 504 is layered above the second strata 506 the filtering quality of the first strata 504 is coarser than the filtering quality of the second strata 506. In an example, the first strata 504 may have a lower porosity than the second strata 506. In a further example, the porous reticulated filter media pieces of the first strata may be larger than the porous reticulated filter media pieces of the second strata 506. In a further example, the porous reticulated filter media piece geometry of the first strata 504 may not be as optimized as the second strata 506, such that the packing density of the second strata 506 is higher than the packing density of the first strata 504. Embodiments employing strata of progressively finer porosity filter media pieces may advantageously create a more even loading through the filter matrix (for example, as compared to strata with homogeneous porosity). In doing so, a higher total inclusion capture efficiency can be achieved.

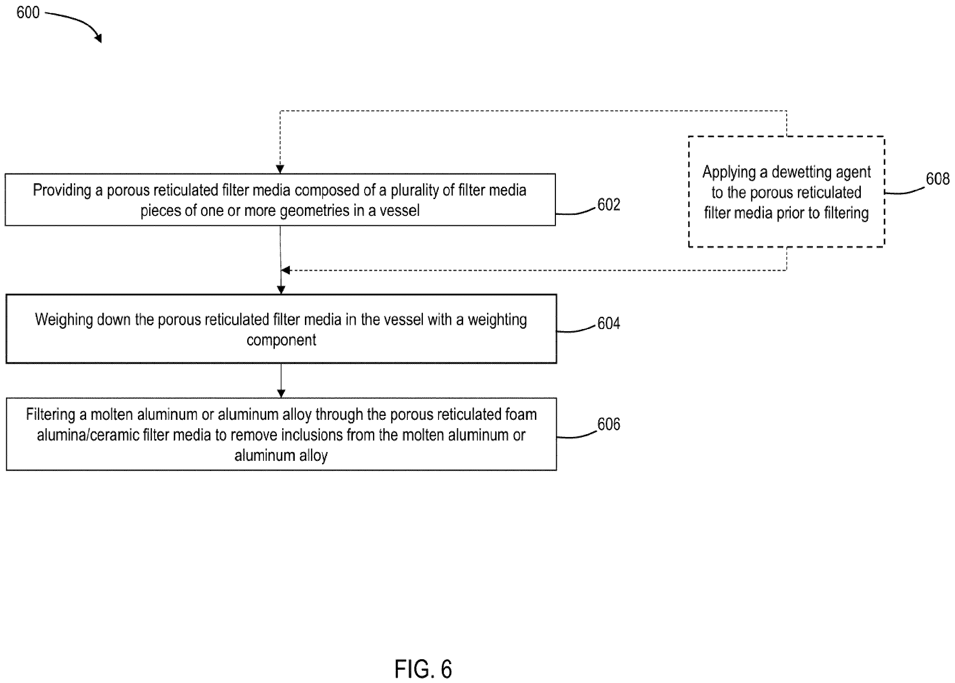

Referring now to Figure 6, shown therein is a flow chart of a method 600 of filtering molten aluminum using a porous reticulated foam alumina porous reticulated filter media, according to an embodiment. The porous reticulated filter media may be the porous reticulated filter media 106 of Figure 1.

In an embodiment, the method 600 may be implemented, at least in part, using the system 100 of Figure 1A. At 602, the method 600 includes providing a porous reticulated filter media composed of a plurality of porous reticulated filter media pieces of one or more geometries in a vessel. The vessel may be the vessel of a deep bed aluminum filtration system. The vessel may be the vessel 104 of Figure 1. At 604, the method 600 includes weighing down the porous reticulated filter media in the vessel with a weighting component. The weighting component may be the weighting component 140 of Figure 1. At 606, the method 600 includes filtering a molten aluminum or aluminum alloy through the porous reticulated filter media to remove inclusions from the molten aluminum or aluminum alloy.

Optionally, at 608, the method 600 may include applying a dewetting agent to the porous reticulated filter media prior to filtering. The dewetting agent may be the dewetting agent as further described herein. Application of the dewetting agent at 608 may occur prior to 602, such as by applying the dewetting agent at any point prior to disposing the porous reticulated filter media in the vessel (e.g. during manufacturing, sometime after manufacturing but prior to use). In other cases, application of the dewetting agent at 608 may occur after 602 and before 604, such as by applying the dewetting agent once the porous reticulated filter media is in the vessel.

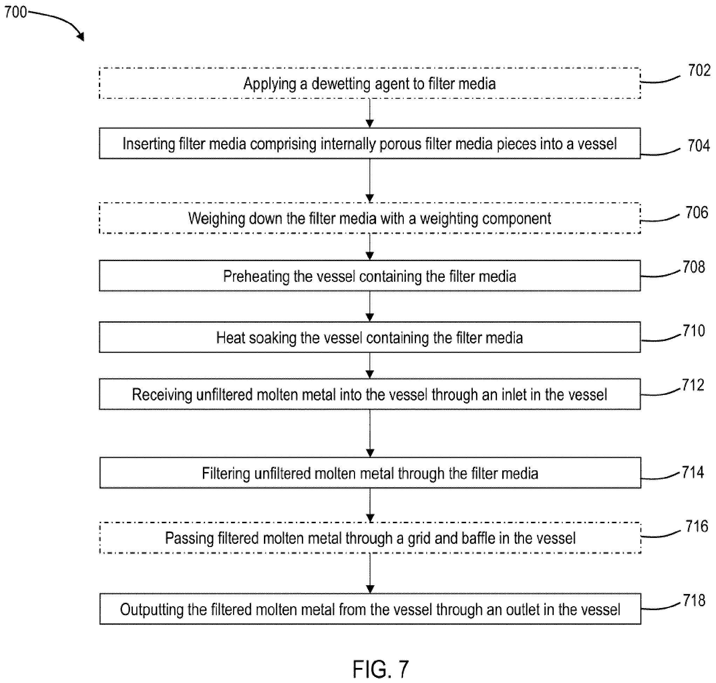

Referring now to Figure 7, shown therein is a method 700 of filtering aluminum 700 with a metal filtration system including a porous reticulated filter media, according to an embodiment. The metal filtration system may be the metal filtration system 100 of Figure 1A. The porous reticulated filter media may be the porous reticulated filter media 106 of Figure 1A.

At 702, the method 700 may include applying a dewetting agent to a porous reticulated filter media. The porous reticulated filter media comprises a plurality of porous reticulated filter media pieces. At 704, the method 700 includes inserting the porous reticulated filter media into a vessel.

At 706, the method 700 includes weighing down the porous reticulated filter media using a weighting component a weighting component. The weighting component may be the weighting component 140 of Figure 1A.

At 708, the method 700 includes preheating the vessel containing the porous reticulated filter media to a threshold temperature. Heating may be provided by one or more heat sources external to or internal to the vessel. The preheat time at 708 of the vessel is less than the preheat time of conventional or existing filtration methods due to the lower thermal mass of the porous reticulated filter media, as described herein. This may also reduce the power required to preheat the vessel.

At 710, the method 700 includes heat soaking the vessel containing the porous reticulated filter media. Heat soaking creates a stable and even thermal gradient in the vessel. The heat soak time at 710 of the vessel is less than the preheat time at 610 of the vessel due to the lower thermal mass of the porous reticulated filter media, as described above. This may also reduce the power required to heat soak the vessel. At 712, the method 700 includes receiving unfiltered molten aluminum into the vessel through an inlet. At 714, the method 700 includes filtering the unfiltered molten aluminum through the porous reticulated filter media. At 716, the method 700 may include passing the filtered molten aluminum through a gird and a baffle in the vessel. At 718, the method 700 includes outputting the filtered molten aluminum from the vessel through an outlet in the vessel.

The first portion of the molten aluminum that flows through and out of the vessel may be used to flush the system. This first portion may be discarded. Preheating the vessel 708, heat soaking the vessel 710 and flushing the vessel may be referred to as priming the vessel. Priming the vessel at 700 requires less time than priming the vessel 600. The less time may be based on the reduced preheat and heat soak times. The less time may also be based on the higher volumetric flow of the molten aluminum at 700 over at 600, particularly during flushing the vessel.

At 712 thru 716 may continue until unfiltered molten aluminum is no longer provided to the vessel. In an embodiment, at 712 through 716 may be interrupted. Interrupting includes ceasing at 712 through 716 and resuming at 712 thru at 716 at a later time without repriming. The vessel may be kept at temperature during the interruption. Molten aluminum may remain in the vessel during the interruption. The vessel may be moved during the interruption. The lower weight of the porous reticulated filter media at 700 over at 600 is advantageous in moving the vessel as it permits a lower weight capacity crane or other manipulating device to be used to move a vessel of similar size. Alternatively, for a crane with the same weight capacity, the lower weight porous reticulated filter media is beneficial as a larger vessel may be used. In this embodiment, the larger vessel may require a higher volume of porous reticulated filter media. However, the lower volumetric weight of the porous reticulated filter media at 700 over at 600 may maintain the weight of the overall system below the weight capacity of the crane.

Referring now to Figure 8, shown therein is a method 800 of manufacturing a porous reticulated filter media, including a plurality of filter media pieces, for use in filtering molten aluminum, according to an embodiment. The porous reticulated filter media pieces may be the porous reticulated filter media prices 138 of Figure 1.

At 802, the method 800 includes immersing a foam in a ceramic slurry. The foam may be a porous reticulated foam. The foam may be configured in the configuration of the intended tortuous path configuration of the porous reticulated filter media piece. This configuration may be based on transformations such as shrinkage that may occur during other operations of the method. At 804, the method 800 includes firing the slurry-soaked foam. Firing may include exposing the slurry-soaked foam to a heat source that hardens the ceramic slurry. The firing may further include exposing the slurry-soaked foam to a heat source that burns the foam. This burning leaves behind tortuous paths in the hardened ceramic of the porous reticulated filter media piece. At 806, the method 800 includes cutting the porous reticulated filter media piece into a plurality of pieces having one or more geometries. Firing may shrink the porous reticulated filter media piece. Cutting the porous reticulated filter media piece after firing provides a more consistent and controllable size and porosity. At 808, the method 800 may include applying a dewetting agent to the porous reticulated filter media pieces.

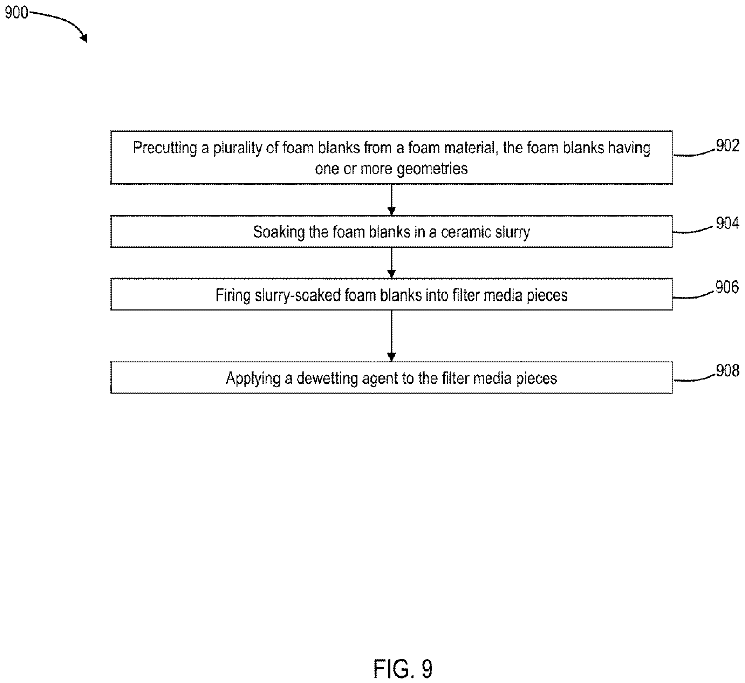

Referring now to Figure 9, shown therein is a method of manufacturing a porous reticulated filter media including a plurality of filter media pieces for use in filtering molten aluminum, according to an embodiment. The porous reticulated filter media pieces may be the porous reticulated filter media prices 138 of Figure 1. The method 900 may advantageously be less expensive than methods of manufacturing in which cutting of filter media pieces is performed after ceramic sintering (e.g. as in method 800).

At 902, the method 900 includes precutting a plurality of foam blanks from a foam material, the foam blanks having one or more geometries. The foam material may be the foam of 802 of Figure 8. The precutting at 902 may be performed similarly to 806 of Figure 8. At 904, the method 900 includes soaking the foam blanks in a ceramic slurry. This may be performed similarly to 802 of Figure 8. At 906, the method 900 includes firing the slurry-soaked foam blanks into filter media pieces. This may be performed similarly to 804 of Figure 8. At 908, the method 900 includes applying a dewetting agent to the filter media pieces. This may be performed similarly to 808 of Figure 8.

As described herein, the present disclosure provides systems, methods, and porous reticulated filter media for filtering aluminum and aluminum alloys. The porous reticulated filter media of the present disclosure (e.g. porous reticulated filter media 106 of Figure 1A), and its use in systems and processes for aluminum filtration, may provide various advantages over existing systems and techniques.

The porous reticulated filter media may provide increased live filter area (e.g. greater than 85% live filter area) for use and longer overall filter life. The increased surface area of the porous reticulated filter media supports a greater amount of inclusion capture area and reduces velocity of the liquid flow. This allows increase capture through intimate contact of the substrate surfaces that inclusions can interact and adhere with.

The porous reticulated filter media may provide for faster preheat of the porous reticulated filter media due to lower mass (e.g. thermal mass of material 80% less) and added porosity which promotes preheat air flow. The porous reticulated filter media may provide for lower preheat requirements such as preheat time and energy consumption.

The porous reticulated filter media may provide a lower overall weight porous reticulated filter media allowing for larger filters as required by process upgrades. The porous reticulated filter media may provide better temperature homogeneity. The porous reticulated filter media may provide for less post-use waste and easier recycling to extract remaining aluminum content of spent porous reticulated filter media.

While the above description provides examples of one or more apparatus, methods, or systems, it will be appreciated that other apparatus, methods, or systems may be within the scope of the claims as interpreted by one of skill in the art.

## Claims

1. A filter media for use in filtering molten aluminum or aluminum alloy, the filter media comprising:
a plurality of porous reticulated filter media pieces (138) composed of at least one type of bonded particle, the plurality of filter media pieces having a porosity between 5 pores per inch (PP) and 90 pores per inch (2 and 36 pores per cm) and being between ¾ inches and 6 inches (1.875 and 15 cm) across and between 1/2 inches and 2 inches (1.25 and 10cm) thick, and wherein the filter media pieces (138) provide a plurality of external and internal tortuous paths between and within themselves, respectively, for the molten aluminum or aluminum alloy (102) to flow through when the filter media pieces are arranged in a filtration vessel (104).

2. The filter media of claim 1, wherein the porosity of the filter media pieces is between 10 PPI and 50 PPI (2 and 10 ppcm).

3. The filter media of claim 1, wherein the porosity of the filter media pieces is between 10 PPI and 30 PPI (2 and 6 ppcm).

4. The filter media of claim 1, wherein the plurality of filter media pieces have substantially the same geometrical shape.

5. The filter media of claim 1, wherein the plurality of filter media pieces have a plurality of geometrical shapes.

6. The filter media of claim 1, wherein the at least one type of bonded particle includes a ceramic.

7. The filter media of claim 1, wherein each of the filter media pieces is treated with a dewetting agent prior to use.

8. The filter media of claim 14, wherein the dewetting agent is fluorine-based or chlorine-based.

9. An inline deep bed aluminum filtration system including the filter media of claim 1.

10. A method of filtering molten aluminum or aluminum alloy, the method comprising:
providing a filter media composed of a plurality of porous reticulated filter media pieces (138) in a vessel (104) such that the filter media pieces (138) provide a plurality of external and internal tortuous paths between and within themselves, respectively, for the molten aluminum or aluminum alloy (102) to flow through when the filter media pieces are arranged in the vessel, wherein the filter media pieces are composed of at least one type of bonded particle, the plurality of filter media pieces having a porosity between 5 pores per inch (PPI) and 90 pores per inch (PPI) (1 and 18 ppcm) and being between ¾ inches and 6 inches across and between 1/2 inches and 2 inches (1.25 and 10 cm) thick; and
filtering the molten aluminum or aluminum alloy through the porous reticulated filter media to remove inclusions from the molten aluminum or aluminum alloy.

11. The method of claim 19, further comprising:
arranging the plurality of filter media pieces in a plurality of strata in the vessel, each of the plurality of strata including a subset of the filter media pieces, and wherein the respective subsets of filter media pieces differ in at least one physical property to provide different filtering characteristics.

12. The method of claim 20, wherein the at least one physical property is any one or more of porosity, size, and geometrical shape.

13. The method of claim 20, wherein the plurality of strata includes at least a top strata having a lowest relative porosity compared to the other strata and a bottom strata having a highest relative porosity compared to the other strata.

14. The method of claim 22, wherein the plurality of strata further includes a middle strata positioned between the top and bottom strata and having a porosity between the porosity of top strata and the porosity of the bottom strata.

15. A filter media for use in filtering molten aluminum or aluminum alloy, the filter media (106) comprising a plurality of porous reticulated filter media pieces (138), each porous reticulated filter media piece having a porosity between 5 pores per inch (PPI) and 90 pores per inch (PPI) (1 and 18 ppcm) and being between ¾ inches and 6 inches (1.9 and 15cm) across, and wherein the filter media is configured to, when arranged in a filtration vessel (104), provide a plurality of external tortuous paths and a plurality of internal tortuous paths for capturing inclusions in the molten aluminum or aluminum alloy (102) as the molten aluminum or aluminum alloy flows through the filter media.
